(19) Europäisches Patentamt
European Patent Office
Office européen des brevets

(11) **EP 2 416 172 A2**

(12) **EUROPÄISCHE PATENTANMELDUNG**

(43) Veröffentlichungstag:
**08.02.2012 Patentblatt 2012/06**

(51) Int Cl.:
***G01S 13/82*** *(2006.01)*

(21) Anmeldenummer: **11170347.6**

(22) Anmeldetag: **17.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **04.08.2010 EP 10171882**

(71) Anmelder: **Albis Technologies AG**
**8047 Zürich (CH)**

(72) Erfinder:
• **Aeschbacher, Michael**
 **8500 Frauenfeld (CH)**
• **Lauper, Alfred**
 **8047 Zürich (CH)**

(74) Vertreter: **Kley, Hansjörg**
**Siemens AG**
**Patentabteilung**
**Postfach 22 16 34**
**80506 München (DE)**

(54) **Distanzmessung für ein RFID-Tag**

(57) Es wird ein FMCW-Verfahren und eine Schaltungsanordnung zur Distanzmessung zwischen einem RFID-Tag (2) und einem Reader vorgeschlagen, bei denen der erforderliche Schaltungsaufbau möglichst einfach ist und das Schalten zwischen Senden und Empfangen keine Synchronisation zwischen Tag und Reader beim Messen erfordert.

Dies wird erreicht durch eine Schaltungsanordnung (1) im RFID-Tag mit einem einzigen Verstärker (20), der wechselseitig über von einem Rechteckgenerator (14, $f_{SW}$) betätigten Schaltern (15) für die Verstärkung in Empfangs- und Senderichtung benutzt wird. Beim vorgeschlagenen Konzept ist der Sende/Empfangs-Rhythmus des Tags (Frequenz des Rechteckgenerators $f_{SW}$) unabhängig vom Sende/Empfangs-Rhythmus des Sendesignals im Reader. Die Sweep Dauer ist relativ kurz und der Hochfrequenzträger kann während der übrigen Zeit für eine (bidirektionale) Kommunikation zwischen Reader und RFID-Tag (2) benutzt werden, insbesondere für die adressierte Übermittlung einer Aktivierung der Schaltungsanordnung. Dadurch lässt sich die gemessene Distanz eineindeutig einem RFID-Tag (2) zuordnen.

**FIG 3**

**Beschreibung**

Die vorliegende Erfindung bezieht sich auf ein Verfahren und eine Schaltungsanordnung zur Distanzmessung zwischen einem RFID-Tag und einem Reader gemäss dem Oberbegriff des Patentanspruches 1 bzw. 9.

Aus dem Stand der Technik sind unterschiedliche Verfahren zur Distanzmessung bekannt. Mit den allermeisten Real Time Location Systemen RTLS kann der Abstand zwischen einem Reader und einem RFID-Tag - kurz «Tag» genannt - nur ungenau bestimmt werden. Genauere Bestimmungen sind über sogenannten Round Trip Time RTT Messungen zwischen Leser und Tag möglich.

Eine Distanzbestimmung für RTLS mittels Frequency Modulated Continuous Wave FMCW ist aus der Radartechnik bekannt. In deutsch wird dieses Verfahren «frequenzmoduliertes Dauerstrichverfahren» genannt, siehe z.B. unter http://www.krohne.com/messprinzip FMCW-Radar Fuellstand-Messung de.3086.0.html. Die Distanz wird aus der Laufzeit eines Funksignals ermittelt. Die Applikation von FMCW für Distanzmessung unter Benutzung von SAW Delay Lines, welche in der Distanz d angebracht sind und zur Überbrückung der Abklingzeit von direkten Reflexionen beim Reader dienen, ist ebenfalls bekannt, z.B. - US 6,407,695 [1] oder

«Drahtlose Abfrage von Oberflächenwellen-Identifikationsmarken und Messwertwandlern» [2].

Um die Laufzeit zu ermitteln, wird ein Hochfrequenzträger linear in der Frequenz moduliert (sweep) und das Signal ausgesendet. Folgende Parameter sind hier beispielhaft aufgeführt:

| Träger $f_{min}$ | 2.400GHz, |
|---|---|
| Sweep Bandbreite | $B_{RF}$ 80MHz, |
| Sweep Dauer | $\tau_{sweep}$ 1ms. |

Die verzögerten Reflexionen sind in der Momentanfrequenz im Rückstand zum Sendesignal und ergeben daher im Empfänger bei der Mischung mit dem Sendesignal entsprechende Differenzfrequenzen, welche proportional zu den Laufzeiten sind. Mittels FFT können alle zeitlich unterschiedlichen Echos aufgelöst und als Spektrum dargestellt werden.

In «2D localisation using SAW-based RFID systems: a single antenna approach» [3] ist ein Lokalisierungssystem RTLS beschrieben, das auf einem 2.45GHz SAW-RFID-System beruht. Für die Lokalisation wird die Rotation der RFID-Reader-Antenne der inhärenten TOF-Distanzmessung kombiniert. Dabei kann eine 2-dimensionale Ortung eines SAW-Tags innerhalb einer Toleranz 3.1cm bei einer maximalen Reichweite bis zu 10m erreicht werden. Die Reichweite bezieht sich dabei auf die Distanz d zwischen Reader und Tag.

Die Benutzung von SAW Delay Lines im Tag bewirkt eine Laufzeitverlängerung um eine definierte Zeitspanne $\tau_D$. Während dieser Grundverzögerung (=definierte Zeitspanne $\tau_D$) können die Umgebungsreflexionen des Sendesignals an Wänden etc. abklingen, bzw. wegen ihrer kurzen Laufzeit vom interessierenden Echo am Tag im Spektrum abgetrennt werden (Hochpassfilterung).
Gewählte Parameter: $\tau_D$ = 800ns.

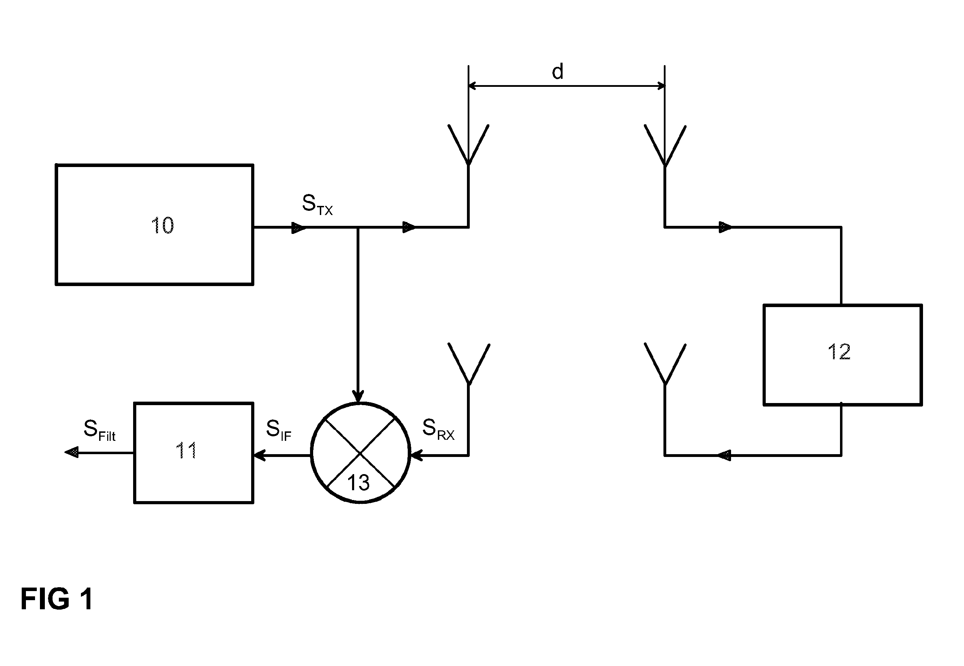

In FIG 1 ist ein Blockschaltbild für die Erläuterung des FMCW-Verfahrens gezeigt. Der Frequenzsweep, also das Sendesignal $S_{TX}$, ist ein frequenzmoduliertes Signal. Ein solches Signal wird mathematisch durch die Formel (4.1) ausgedrückt. Dabei bezeichnen
$f_{min}$ die Startfrequenz,
$k_{FM}$ den Kreisfrequenzhub, also die Bandbreite des Sweeps in rad/s ($2\Pi B_{RF}$) . Dieses Signal $S_{TX}$ wird ausgesendet und zusätzlich direkt auf den Empfangsmischer geführt.

$$s_{TX}(t) = A_{TX} \cdot cos\left(2\pi \cdot f_{min} \cdot t + k_{FM} \cdot \int_0^t r(T)dT\right) = A_{TX} \cdot cos(\varphi(t)) \qquad (4.1)$$

Das ausgesendete Signal $S_{TX}$ wird zweimal durch die zurückgelegte Distanz und die Delay Line 12 verzögert. Die Verzögerung $\tau_{SAW}$ der Delay Line 12 ist konstant. Die distanzabhängige Verzögerung $\tau_{dist}$ berechnet wird mit der Formel (4.3) berechnet.

$$\tau = \tau_{SAW} + 2 \cdot \tau_{dist} \qquad (4.2)$$

$$\tau_{dist} = \frac{d}{c} \qquad (4.3)$$

Durch diese Verzögerungen entsteht das Empfangssignal von Formel (4.4).

$$s_{RX}(t) = A_{RX} \cdot \cos(\varphi(t - \tau)) = A_{RX} \cdot \cos\left(2\pi \cdot f_{min} \cdot (t - \tau) + k_{FM} \cdot \int_0^{t-\tau} r(T)dT\right) \quad (4.4)$$

Das empfangene Signal wird nun mit dem Sendesignal $S_{TX}$ heruntergemischt. Mathematisch entspricht dies einer Multiplikation der beiden Signale. Formel (4.5) zeigt das Ausgangssignal des Mischers.

$$s_{IF}(t) = \frac{A_{TX} \cdot A_{RX}}{2} \cdot [\cos(\varphi(t) - \varphi(t - \tau)) + \cos(\varphi(t) + \varphi(t - \tau))] \qquad (4.5)$$

Der zweite Term stellt die Spiegelfrequenzen am Ausgang des Mischers dar. Diese sind hier nicht von Interesse. Aus diesem Grunde filtert man den hochfrequenten Teil weg. In Formel (4.6) ist das gefilterte Signal dargestellt.

$$s_{Filt}(t) = \frac{A_{TX} \cdot A_{RX}}{2} \cdot \cos\left(2\pi \cdot f_{min} \cdot \tau + k_{FM} \cdot \int_{t-\tau}^{t} r(T)dT\right) \qquad (4.6)$$

Für r(t) wird nun die Rampenfunktion von Formel (4.7) eingesetzt. Aus Gründen der Übersichtlichkeit wurde eine unendliche Rampe gewählt. $\tau_{sweep}$ bezeichnet darin die Dauer, in der durch die Bandbreite $B_{RF}$ gefahren wird.

$$r(t) = \frac{1}{T_{sweep}} \cdot t \qquad (4.7)$$

Mit dieser Rampe und der Bandbreite $B_{RF}$ ergibt sich das gefilterte Signal von Formel (4.8). Der zweite und dritte Term im Cosinus sind nicht von der Zeit abhängig und entsprechen so einer konstanten Phasenverschiebung.

$$s_{Filt}(t) = \frac{A_{TX} \cdot A_{RX}}{2} \cdot \cos\left(2\pi \cdot f_{min} \cdot \tau + k_{FM} \cdot \int_{t-\tau}^{t} \frac{1}{T_{sweep}} \cdot T dT\right)$$

$$s_{Filt}(t) = \frac{A_{TX} \cdot A_{RX}}{2} \cdot \cos\left(2\pi \cdot \frac{B_{RF}}{T_{sweep}} \cdot \tau \cdot t + 2\pi \cdot f_{min} \cdot \tau - 2\pi \frac{B_{RF}}{T_{sweep}} \frac{\tau^2}{2}\right) \qquad (4.8)$$

$$s_{Filt}(t) = \frac{A_{TX} \cdot A_{RX}}{2} \cdot \cos\left(2\pi \cdot \frac{B_{RF}}{T_{sweep}} \cdot \tau \cdot t + \varphi_0\right)$$

Das Verhältnis zwischen Bandbreite und Rampendauer ist ein wichtiger Parameter und wird als Rampensteilheit S bezeichnet.

$$S = \frac{B_{RF}}{T_{sweep}} \qquad (4.9)$$

Das gefilterte Signal besitzt eine Frequenz $f_{Filt}$ nach Formel (4.10). Diese ist proportional abhängig von der Verzögerungszeit $\tau_{SAW}$ und somit auch von der Distanz d. Anmerkung zur Notation: Im späteren Kontext dieser Schrift wird $\tau_{SAW}$ mit $\tau_D$ bezeichnet.

$$f_{Filt} = \frac{B_{RF}}{T_{sweep}} \cdot \tau = S \cdot \tau$$

$$f_{Filt} = S \cdot (\tau_{SAW} + 2 \cdot \tau_{dist}) = S \cdot \left( \tau_{SAW} + 2 \cdot \frac{d}{c} \right) \qquad (4.10)$$

Aufgelöst nach der Distanz d ergibt sich Formel (4.11), womit man die Distanz aus der gemessenen Frequenz berechnen kann.

$$d = \left( \frac{f_{Filt}}{S} - \tau_{SAW} \right) \cdot \frac{c}{2} \qquad (4.11)$$

Einer der Parameter in diesem Verfahren ist die Steilheit S der Frequenzrampe. Sie lässt sich durch die Formel (4.9) berechnen, wobei $B_{RF}$ der Bandbreite und $\tau_{sweep}$ der Dauer einer Rampe entspricht. Die vom Gesetzgeber im ISM-Band freigegebene Bandbreite beträgt 80 MHz. Diese Bandbreite ergibt eine zeitliche Auflösung $\tau_{res}$ von 12.5ns, was einer Distanzauflösung $d_{res}$ von 1.875m entspricht, Formel (4.12).

$$T_{res} = \frac{1}{B_{RF}} = 12.5\,\text{ns}$$

$$d_{res} = \frac{T_{res} \cdot c}{2} = 1.875\,\text{m} \qquad (4.12)$$

Diese Überlegungen ergeben, dass mit dem FMCW-Verfahren für eine maximale Distanz von 75m und einer Laufzeitverlängerung im Tag von $\tau_D$ = 800ns eine maximale Verzögerung von 1300ns auftritt. Mit einer Sweep Dauer $\tau_{sweep}$ = 1ms genügt eine Abtastrate von 208kHz für das niederfrequente Signal (Differenzfrequenz) im Reader. Die anschliessende digitalisierte Auswertung kann beispielsweise in einem DSP oder Mikroprozessor erfolgen. Die vorstehende Abtastrate von 208 kHz ist aus der Formel (4.10) wie folgt bestimmt:

$B_{RF}$ = 80MHZ
$\tau_{sweep}$ = 1ms
$\tau$ = 1300ns

Mit diesen Werten ergibt sich aus der Formel (4.10) eine Frequenz $f_{Filt}$ = 104 kHz.
Nach dem Shannon-Theorem ist somit im Reader eine Abtastrate von minimal 208kHz vorzusehen.

Die Rauschbandbreite (prop. zur Sweep Dauer $\tau_{sweep}$) ist klein und erlaubt eine Distanzbestimmung für bewegte Objekte auch mit grossen Geschwindigkeiten bis z.B. 200m/s. Während der Messzeit von $\tau_{sweep}$ = 1ms wird das Objekt bei einer Geschwindigkeit von 200m/s, um 20cm verschoben. Verglichen mit einer Grundgenauigkeit gemäss Formel (4.12) von 1.875m ist dies vernachlässigbar.

In der Praxis tritt jedoch das Problem auf, dass bei kontinuierlichem Senden und gleichzeitigem Empfangen dann starke Störsignale auftreten, wenn sich metallisch bewegliche Teile im bestrahlten Feld befinden. Die Störsignale beruhen auf der zeitlich veränderten Radarrückstreueigenschaft solcher Objekte.

Es ist aus der Literatur bekannt, dass man deshalb vorteilhaft im Reader zwischen Senden und Empfang umschaltet, wie dies beschrieben ist z.B. in

- «Messen mit Oberflächenwellen» [4] und
- «Switching system for single antenna operation of an S-band FMCW radar» [5].

Dies geschieht ohne den Frequenz-Sweep $S_{TX}$ selber anzuhalten, um die Lesezeit nicht zu verlängern. Wird die Schaltfrequenz genügend hoch gewählt, so werden die durch den Schaltvorgang fehlenden Signalanteile durch Mittelung ihrer Wirkung beraubt. Es kommt lediglich zu einer Reduktion der Empfangsenergie. Die Empfangsdauer $\tau_E$ pro Schaltzyklus wird um die maximale Signallaufzeit in Luft höher gewählt als die Sendedauer $\tau_s$, um für die schwachen, entfernten Reflexionen den gesamten reflektierten Burst zu erhalten.

Gewählte Parameter:
Sendedauer $\tau_s$ = 800ns,
Empfangsdauer $\tau_E$ = 1300ns.

SAW Delay Lines haben zur Verzögerung proportionale relative hohe Verluste, welche das reflektierte Signal unzulässig abschwächen. Das Anbringen eines Verstärkers zur Kompensation ist allgemein bekannt. Der Hauptgrund für das Anbringen eines Verstärkers ist jedoch die Streckendämpfung. Ein Signal durchläuft zweimal die Strecke mit einer Streckendämpfung ca 75dB:

Reader → Tag: 75dB
Tag → Reader: 75dB.

Wie vorhin ausgeführt das Signal in der SAW Delay Line um 20dB abgeschwächt. Diese Gesamtdämpfung von ca. 170dB muss daher mit einem Verstärker auf dem Tag teilweise kompensiert werden.

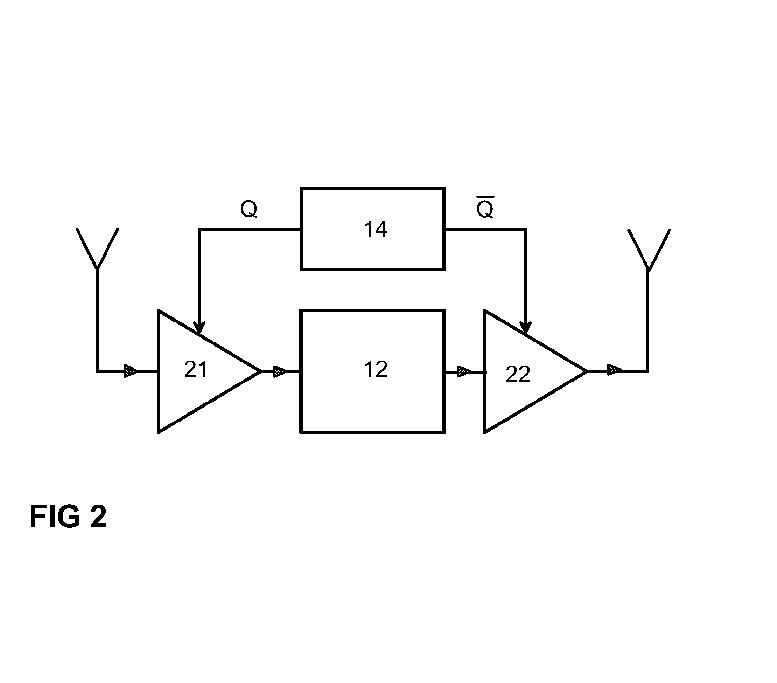

Um hohe Verstärkungen zu erzielen und dabei ein Schwingen der Stufen zu verhindern, ist der Einsatz von SAW Delay Lines ebenfalls bekannt. Dabei werden (vgl. FIG 2) der Verstärker 21 vor der Delay Line 12 und derjenige Verstärker 22 nach der Delay Line 12 wechselseitig ein- und ausgeschaltet für die Zeitdauer des Delays, wie dies in «INTEGRAL BACKSCATTERING TRANSPONDERS FOR LOW COST RFID APPLICATIONS» [6] beschrieben ist. Die Anwendung betrifft dort SAW Tags mit separater Empfangs- und Backscatter Antenne. Das in [6] offenbarte «sequenced amplifier tag» mit den zwei Verstärkern 21 und 22 ist in der FIG 2 dargestellt.

Fig. 4 in der Schrift US2004104769 [7] zeigt die Idee, ein RF Signal noch einmal durch dieselbe Delay Line und denselben Verstärker zu schicken. Dazu werden geschaltete Verstärker benutzt. In dieser Applikation wird der DC-Strom der Verstärker als AM-Demodulationssignal weiter verarbeitet. Diese Idee erfordert gleichwohl einen weiteren Eingangsverstärker.

Der vorliegenden Erfindung liegt nun die Aufgabe zugrunde, ein FMCW-Verfahren und eine Schaltungsanordnung zur Distanzmessung zwischen einem RFID-Tag und einem Reader anzugeben, bei denen der erforderliche Schaltungsaufbau möglichst einfach ist und das Schalten zwischen Senden und Empfangen keinerlei Synchronisation mit dem Sendesignal des Readers erfordert.

Diese Aufgabe wird durch die in den unabhängigen Patentansprüchen angegebenen Massnahmen gelöst. Vorteilhafte Ausgestaltungen der Erfindung sind in weiteren Ansprüchen angegeben.

Um mit dem FMCW-Verfahren eine Distanzmessung betreiben zu können, muss sich das vom Reader ausgesendete und am Tag reflektierte Signal von Raumreflexionen, d.h. von Reflexionen an Wänden etc., unterscheiden lassen. Dazu wird wie erwähnt, im Tag das Sendesignal mit einer Delay Line zusätzlich, z.B. um $\tau_D$ = 800ns, verzögert, bevor es zurückgesendet wird. Im Reader wird periodisch zwischen Senden und Empfangen umgeschaltet, um auch für grosse Distanzen keine unnötigen Störungen des Empfangssignals zu bewirken. Die Sende-/Empfangssequenz $\tau_s$ / $\tau_E$ richtet sich nach der Verzögerungszeit der Delay Line und der maximalen Messdistanz.

Die Delay Line hat Verluste. Die Verluste müssen durch Verstärkung ausgeglichen werden. Um ein Schwingen zu vermeiden muss eine Trennung zwischen Empfangs- und Sendepfad vorgenommen. Dies wird mit der Kombination Schalter und Delay Line sichergestellt.

So ergeben sich die folgenden Vorteile:

i) Durch das Vorsehen eines einzigen Verstärkers und die Beschränkung der Schaltung auf die in den Patentansprüchen genannten wesentlichen Elemente wird der Stromverbrauch auf dem Tag minimalisiert. Dies ist von besonderer Bedeutung für eine hohe Autonomie der Tags.

ii) Da in den meisten Anwendungen die Tags sich einigermassen in Ruheposition befinden, kann die Distanzmessung in zeitlichen Abständen von einigen Sekunden oder gar Minuten erfolgen. Die Sweep Dauer $\tau_{sweep}$ beträgt typischerweise 1ms. Dies erlaubt, für die wesentlich grösseren Zeitintervalle ausserhalb einer Distanzmessung das betreffende Frequenzband für eine Kommunikation zwischen Reader und einer Mehrzahl von Tags zu nutzen und diesen Kanal insbesondere für die Aktivierung der für die Distanzmessung auf dem Tag befindlichen Schaltungsanordnung zu nutzen. So lässt sich nicht nur die Distanz zu einem Tag messen, sondern auch noch eine Identität dieses Tags der gemessenen Distanz zuordnen.

iii) Die Frequenz $f_{SW}$ des Rechtecksignals für die Umschaltung zwischen Empfangen und Senden im Tag braucht nicht mit dem Sende- und Empfangsrhythmus des Readers synchronisiert zu werden. Der Sende- Empfangsrhythmus im Tag muss einzig auf die Verzögerungszeit $\tau_D$ der Delay Line abgestimmt zu werden. Um das empfangene Signal nicht zu verlieren, müssen eine ungerade Anzahl Halbperioden (z.B. dreimal Empfangen und zweimal Senden) über $\tau_D$ gelegt werden. Im statistischen Mittel werden von der empfangbaren Energie 6dB weniger ausgewertet.

Die Erfindung wird nachfolgend anhand der Zeichnung beispielsweise näher erläutert. Dabei zeigen:

Figur 1    Blockschaltbild zur Erläuterung des FMCW-Verfahrens nach dem Stand der Technik;

Figur 2    Blockschaltbild eines «sequenced amplifier tag» nach dem Stand der Technik [6];

Figur 3    Blockschaltbild eines Tags mit einer Schaltungsanordnung gemäss der vorliegenden Erfindung;

Figur 4    Zeitdiagramme gemäss der vorliegenden Erfindung, die die zwischen Reader und Tag übermittelten Signale einschliesslich ihrer Verarbeitung im Tag repräsentieren;

Figur 5    Nicht massstäbliche Darstellung des Verfahrens in einem Zeit-Frequenz-Diagramm.

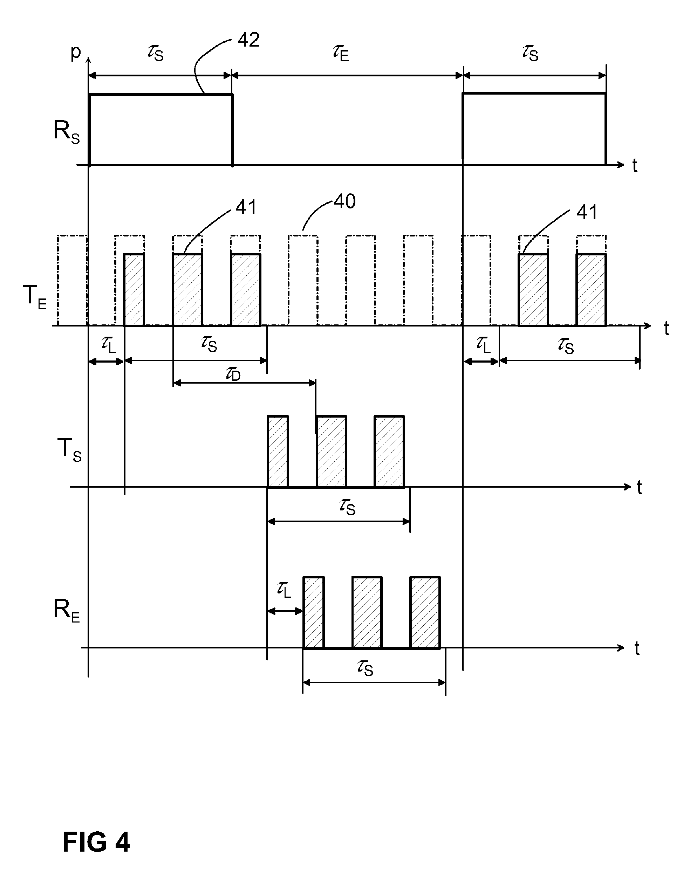

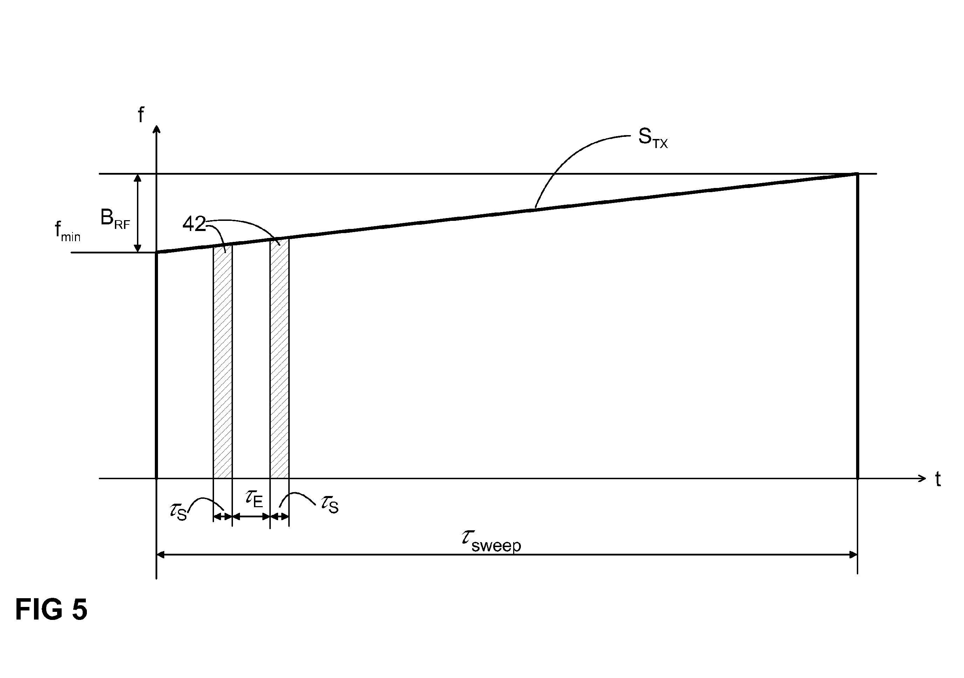

Figur 4 zeigt unter $R_S$ ein von einem Reader ausgesandtes Signal 42 in einer Zeit-/Pegel-Darstellung. Genau genommen ist dieses Signal kein Rechtecksignal, sondern Teil des Sweeps $S_{TX}$, wie er in Figur 5 dargestellt ist. Der Sweep $S_{TX}$ ist dabei zu verstehen als ein linear in der Frequenz modulierter Hochfrequenzträger $f_{min}$. Es sind folgende Parameter vorgesehen:

Sendedauer                    $\tau_S$
Empfangsdauer im Tag    $\tau_E$.

Die Empfangsdauer $\tau_E$ genügt der Beziehung:

$$\tau_E = \tau_S + 2 \cdot \tau_L \,,$$

wobei die Signallaufzeit (auch TOF genannt) zwischen Reader und Tag mit $\tau_L$ bezeichnet ist.

Bedingt durch die Signallaufzeit $\tau_L$ zwischen Reader und Tag 2 trifft dieses Signal mit der Verzögerung $\tau_L$ auf dem Tag 2 ein. Auf dem Tag 2 wird in der Schaltungsanordnung 1 mit einem Rechteckgenerator 14 dieses empfangene Signal 42 (als solches in der FIG 4 nicht dargestellt unter $T_E$) abgetastet. Der Signalverlauf des Rechteckgenerators 14 ist in der Figur 4 unter $T_E$ mit dem Bezugszeichen 40 dargestellt, das abgetastete empfangene Signal mit dem Bezugszeichen 41. Auch hier nochmals der Hinweis, dass das abgetastete Signal 41 kein Rechtecksignal ist, sondern in einer Zeit-Frequenz-Darstellung dem «Rechteck» 42 in der FIG 5 entspricht. Die Frequenz $f_{SW}$ des Rechteckgenerators beträgt 3.125MHz.

In der Figur 4 ist unter $T_S$ das abgetastete Signal 41 dargestellt, das von der Delay Line 12 mit einer Verzögerung $\tau_D$ dem Verstärker 20 zuführt wird und nach erfolgter Verstärkung über die Antenne 16 in Richtung Reader ausgesendet wird. In der Figur 4 ersieht man unter $R_E$ das vom Reader empfangene Signal.

Die Schaltfrequenz $f_{SW}$ des Rechteckgenerators 14 ist nach folgender Frequenz gewählt:

$$f_{SW} = \frac{2n-1}{2 \cdot \tau_D} \quad \text{mit } n = 1, 2, 3, ..$$

In die Verzögerungszeit $\tau_D$ der Delay Line 12 ist die Grössenordnung der zu messenden Distanz gemäss der eingangs genannten Formel (4.11) enthalten. Wie dort angegeben sind für eine Distanz von 75m folgende Werte zu wählen:

| | | |
|---|---|---|
| $\tau_D$ | = | 800ns |
| $f_{SW}$ | = | 3.125MHz für n = 3, siehe Abtastung 40 in Figur 4 unter $T_E$; |
| $\tau_L$ | | 500ns |
| $\tau_S$ | = | 800ns. |

Die in diesem Beispiel gewählten gleich langen Zeitintervalle

| | | |
|---|---|---|
| $\tau_D$ | = | 800ns und $\tau_S$ = 800ns sind zufällig. |

Die Frequenz $f_{SW}$ sollte nicht zu hoch sein um den Vorgang möglichst unabhängig von den Schalter Anstiegs- und Abfallzeiten zu machen und den Stromverbrauch gering zu halten. Andrerseits nicht zu tief, da sonst durch den Schaltvorgang im Reader unerwünschte Aliasterme entstehen.

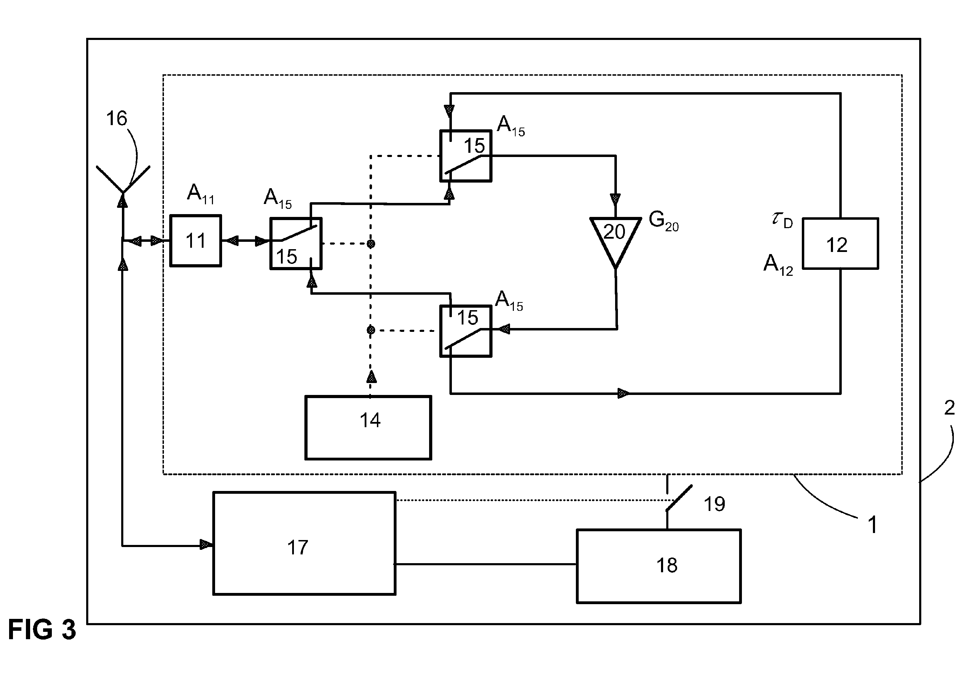

Die beiden Schalter 15 (siehe dazu die FIG 3) werden jeweils 2 mal durchlaufen pro Signalpaket. Durch das Schaltprinzip entsteht ein Verlust von 6dB, da nur 50% des empfangbaren Signals verarbeitet wird. Dazu addieren sich 6 mal der Schalterverlust der Schalter 15 von je $A_{15}$ = 0.6 dB und 2 mal die Filterdämpfung $A_{11}$ = 2.5dB. Dem gegenüber stehen 2 mal $G_{20}$= 34dB des Verstärkers und einmal $A_{12}$ = 22 dB Dämpfung durch die SAW Delay Line. Dies ergibt netto eine Verstärkung in der Schaltungsanordnung von

2 * 34DB - 6 * 0.6dB - 22dB- - 2 * 2.5dB $\approx$ 37 dB. Dies bewirkt die eingangs genannten Kompensation der Streckendämpfung, dort mit 2*75dB angegeben ist.

Der Schaltvorgang ist komplett asynchron zum vom Reader ausgesandten Trägersignal und asynchron zum Schaltrhythmus $\tau_S$ / $\tau_E$. Der Schaltvorgang benötigt keinerlei Information vom Reader oder aus dem Trägersignal. Eine Genauigkeit des Taktes $f_{SW}$ von wenigen Prozenten ist ausreichend.

Die Schaltungsanordnung 1 auf einem Tag 2 zur Durchführung des Verfahrens gemäss der Figur 4 ist der Figur 3 zu entnehmen:

In der in Figur 3 gezeigten Schalterstellung der Schalter 15 wird ein auf dem Tag 2 bzw. in der Schaltungsanordnung 1 empfangenes Signal gemäss einem «Rechteck» 41 abgetastet und über den Verstärker 20 mit der Verstärkung $G_{20}$ der Delay Line 12 zugeführt. Zu einem um $\tau_D$ späteren Zeitpunkt wird das von der Delay Line 12 abgegebene Signal in der anderen Schalterstellung der Schalter 15 (diese Schalterstellung ist in Figur 4 nicht dargestellt) dem gleichen Verstärker 20 zugeführt und über den Bandpass 11 der Antenne 16 zugeführt. Der Bandpass ist auf das Frequenzband 2.4GHz mit einer Bandbreite von 80MHz abgestimmt. Dadurch werden alle Störterme ausserhalb des erlaubten Frequenzbandes im gewählten Kanal ausgefiltert.

Die Distanzmessung erfolgt innerhalb einer Sweep Dauer $\tau_{sweep}$, hier beispielhaft innerhalb $\tau_{sweep}$ = 1ms. In konkreten Anwendungen ist es nur erforderlich, die Distanz in zeitlichen Intervallen von rund 500ms bis einige 10 Sekunden oder eventuell Minuten zu messen. Das Band 2.4GHz ist also ausserhalb der Distanzmessung nicht belegt. Dieses Band wird nun vorteilhafterweise für die nach dem Stand der Technik bekannte adressierte Kommunikation zwischen einem Reader und einer Mehrzahl von Tags 2 benutzt. Insbesondere hat jedes Tag 2 eine Identität. In der Figur 4 ist dies stark vereinfacht mit einem Controller 17 und einer Batterie 18 dargestellt. Über diese vorgenannte Kommunikation kann der Controller 17 gezielt von einem Reader angewiesen werden, zu einem definierten Zeitpunkt, genau Startzeitpunkt für eine bestimmte Zeitdauer in der Grössenordnung von $\tau_{sweep}$ die Schaltungsanordnung 1 über einen Schalter 19 mit Energie ab einer Batterie 18 zu versorgen und das hier offenbarte Verfahren für die Distanzmessung durchzuführen. Die Kommunikation ist adressiert und bidirektional, das bedeutet, dass auf dem Reader die festgestellte Distanz jenem Tag 2 zuzuordnen ist, dem zuvor ein Befehl für die Aktivierung der Schaltungsanordnung 1 übermittelt wurde. Da sowohl für die Distanzmessung als auch für die Kommunikation das gleiche ISM-Band (hier 2.4GHz) benutzt wird, kann auch die gleiche Sende-/Empfangsantenne 16 benutzt werden. Allein für die Aktivierung der Distanzmessung würde eine unidirektionale adressierte Kommunikation Reader -> Tag genügen.

**Liste der Bezugszeichen, Glossar**

| | |
|---|---|
| 1 | Schaltungsanordnung |
| 2 | Tag; RFID-Tag |
| 10 | Frequenzsweep |
| 11 | Filter; Bandpass |
| 12 | Delay Line, Verzögerungselement, SAW delay line |
| 13 | Mischer, Multiplikator |
| 14 | Rechtecksignalgenerator |
| 15 | Schalter, HF-Schalter |
| 16 | Antenne, Sende-/Empfangsantenne |
| 17 | Controller |
| 18 | Power Supply, Batterie |
| 19 | Schalter |
| 20 | Verstärker |
| 21 | Verstärker, erster Verstärker, Amplifier |
| 22 | Verstärker, zweiter Verstärker, Amplifier |
| 40 | Abtastsignal |
| 41 | empfangenes abgetastetes Signal |
| 42 | Vom Reader ausgesendeter linear in der Frequenz modulierter Hochfrequenzträger der Dauer $\tau_S$ |
| $A_{11}, A_{12} ..$ | Attenuation, Abschwächung in den entsprechenden Elementen |
| $B_{RF}$ | Sweep Bandbreite |
| $f_{SW}$ | Schaltfrequenz des Rechteckgenerators 14 |
| $G_{20}$ | Gain, Verstärkung in den entsprechenden Elementen |
| d | Distanz, Distanz zwischen RFID-Tag und Reader |
| $f_{min}$ Frequenz | des Hochfrequenzträgers |
| FFT | Fast Fourier Transformation |
| FMCW | Frequency Modulated Continuous Wave |

ISM Industrial Scientific Medical; Frequenzband nach ITU, www.itu.int

P Pegel, digitaler Pegel

SAW Surface Acoustic Wave

RFID Radio Frequency Identification

RTLS Real Time Location Systeme

sw switch

TOF Time Of Flight, Laufzeit $\tau_L$

$\tau$ Zeitdauer

$\tau_D$ Verzögerungszeit einer Delay Line, Verzögerungszeit der Delay Line 12

$\tau_E$ Empfangsdauer aus Sicht des Readers

$\tau_L$ Laufzeit zwischen Reader und Tag

$\tau_S$ Sendedauer aus Sicht des Readers

$\tau_{sweep}$ Sweep Dauer

**Liste der zitierten Dokumente**

[1] US 6,407,695
«Process for carrying out a non-contact remote enquiry»,
Stierlin Roland, et al.

[2] «Drahtlose Abfrage von Oberflächenwellen-
Identifikationsmarken und Messwertwandlern»,
F. Seifert, A. Pohl, L. Reindl und R. Steindl, Volume 115, e&i Volume 115, Numbers 7-8 / July, 1998, Numbers 7-8 / July, 1998 Springer Verlag.

[3] «2D localisation using SAW-based RFID systems: a single antenna approach» Darmindra D. Arumugam, Int. J. Radio Frequency Identification Technology and Applications, Vol. 1, No. 4, 2007.

[4] «Messen mit Oberflächenwellen»
Helmuth Lemme, Elektronik 10/1997

[5] «Switching system for single antenna operation of an S-band FMCW radar» I.A. McGregor, IEE Proc.-Radar, Sonar Navig., Vol. 141, No. 4, August 1994.

[6] «INTEGRAL BACKSCATTERING TRANSPONDERS FOR LOW COST RFID APPLICATIONS», Michael Y. Laukine, Peter Cole; http://autoidlabs.eleceng.adelaide.edu.au/Tutorial/backscat.pdf

[7] US 2004/010769 A1
«Amplifier»,
Cheer Eric Ronald

**Patentansprüche**

1. FMCW-Verfahren zur Bestimmung der Distanz d zwischen einem Reader und einem Tag(2) mit den Schritten:

   i) Aussenden eines Signals definierter Dauer $\tau_S$ durch den Reader, wobei das Signal ein linear in der Frequenz modulierter Hochfrequenzträger ($f_{min}$, $B_{FR}$, $\tau_{sweep}$) ist;
   ii) Empfangen des ausgesandten Signals durch eine auf einem Tag (2) befindliche Schaltungsanordnung (2) mit einer durch die Distanz d bestimmten Laufzeit $\tau_L$;
   iii) Verstärken des empfangenen Signals in einem Verstärker (20, $G_{20}$) und Verzögern um eine feste Verzögerungszeit $\tau_D$ in einer Delay Line (12);
   iv) Verstärken (20, $A_{20}$) und Aussenden (16) des verzögerten Signals;
   v) Empfangen während einer Dauer $\tau_E$ durch den Reader des vom Tag (1) ausgesendeten Signals und Bestimmung der Distanz aus der Frequenz des vom Reader empfangenen Signals;
   **dadurch gekennzeichnet, dass**
   vi) im Verfahrensschritt ii) das empfangene Signal (42) mit von einem Rechtecksignal (40) betätigten Schaltern (15) abgetastet wird und als empfangenes abgetastetes Signal (41) über den Verstärker (20) der Delay Line (12) zugeführt wird
   und dass
   vii) in der im Verfahrensschritt vi) inversen Schalterstellung der Schalter (15) das von der Delay Line (2) um die Verzögerungszeit $\tau_D$ abgegebene Signal dem Verstärker (20) zugeführt und von der Schaltungsanordnung (1) ausgesendet wird.

2. FMCW-Verfahren nach Anspruch 1,
   **dadurch gekennzeichnet, dass**
   die Frequenz ($f_{SW}$) des Rechtecksignals asynchron zum durch die Sendedauer $\tau_S$ und Empfangsdauer $\tau_E$ definierten Sende-/Empfangs-Rhythmus des Readers ($\tau_S$ / $\tau_E$) ist, und eine ungerade Anzahl der Halbperioden (2/$f_{SW}$) die Verzögerungszeit $\tau_D$ bilden.

3. FMCW-Verfahren nach Anspruch 1 oder 2,
   **dadurch gekennzeichnet, dass**
   im Verfahrensschritt vii) das dem Verstärker (20) entstammende Signal über ein Filter (11) der Antenne (16) zugeführt wird, um vom Schalten entstehende Frequenzen auszufiltern.

4. FMCW-Verfahren nach einem der Ansprüche 1 bis 3,
   **dadurch gekennzeichnet, dass**
   der linear in der Frequenz modulierter Hochfrequenzträger ($f_{min}$, $B_{FR}$, $\tau_{sweep}$) für eine Distanzmessung während einer bestimmten Dauer $\tau_{sweep}$ ausgesendet wird.

5. FMCW-Verfahren nach Anspruch 4,
   **dadurch gekennzeichnet, dass**
   ausserhalb der bestimmten Dauer $\tau_{sweep}$ der Hochfrequenzträger für eine adressierte bidirektionale Kommunikation zwischen einem Tag (2) und einem Reader benutzt wird, um eine ein Tag (2) identifizierende Information auszutauschen und einen Startzeitpunkt für das Aussenden des linear in der Frequenz modulierten Hochfrequenzträgers ($f_{min}$) an die Schaltungsanordnung (1) zu übermitteln.

6. FMCW-Verfahren nach einem der Ansprüche 1 bis 5,
   **dadurch gekennzeichnet, dass**
   für den Hochfrequenzträger eine Frequenz aus dem ISM-Band vorgesehen ist.

7. FMCW-Verfahren nach Anspruch 6,
   **dadurch gekennzeichnet, dass**
   für den Hochfrequenzträger die Frequenz 2.4GHz vorgesehen ist.

8. FMCW-Verfahren nach einem der Ansprüche 1 bis 7,
   **dadurch gekennzeichnet, dass**
   für eine Distanzmessung in der Grössenordnung von d = 75m folgende Grössenordnungen für Zeitdauern vorgesehen sind:

| Sendezeit | $\tau_S$ | = | 800ns, |
|---|---|---|---|
| Empfangszeit | $\tau_E$ | = | 1300ns, |
| Verzögerungszeit | $\tau_D$ | = | 800ns. |

9. RFID-Tag (2) enthaltend eine Schaltungsanordnung (1) und eine Antenne (16) zur Durchführung der Schritte des FMCW-Verfahrens nach einem der Ansprüche 1 bis 7, wobei die Schaltungsanordnung (1) enthält:

- eine Delay Line (12, $\tau_D$), der über einen Verstärker (20) ein linear in der Frequenz modulierter von der Antenne (16) empfangener Hochfrequenzträger (42, $\tau_S$) zugeführt wird und verzögert über einen Verstärker (20, $G_{20}$) der Antenne (16) zur Aussendung zugeleitet wird;
- einen Rechteckgenerator (14) der die Verstärker (20, $G_{20}$) über Schalter (15) wechselseitig ein- und ausschaltet,

**dadurch gekennzeichnet, dass**

- die Schaltungsanordnung (1) einen einzigen Verstärker (20, $G_{20}$) aufweist, der wechselseitig für Empfang und Aussendung eines Signals mit der Antenne (16) über die Schalter (16) verbindbar ist;
- mit den vom Rechteckgenerator (14) betätigten Schaltern (15) der empfangene Hochfrequenzträger (42) abgetastet (41) wird und so dem Verstärker (20, $G_{20}$) zugeführt wird.

10. RFID-Tag (2) enthaltend die Schaltungsanordnung (1) nach Anspruch 9
**dadurch gekennzeichnet, dass**
die Antenne (16) mit einem Bandpass (11) verbunden ist, um durch das Schalten mit den Schaltern (15) entstehende Frequenzen auszufiltern.

11. RFID-Tag (2) enthaltend die Schaltungsanordnung (1) nach Anspruch 9 oder 10
**dadurch gekennzeichnet, dass**
ein auf dem RFID-Tag (2) befindlicher Controller (17) die Schaltungsanordnung (1) aufgrund eines empfangenen Befehls für die Distanzmessung mit einem weiteren Schalter (19) aktivierbar ist.

FIG 1

FIG 2

FIG 3

**FIG 4**

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6407695 B
- US 2004104769 A

- US 2004010769 A1

**In der Beschreibung aufgeführte Nicht-Patentliteratur**

- **DARMINDRA D. ARUMUGAM.** 2D localisation using SAW-based RFID systems: a single antenna approach. *Int. J. Radio Frequency Identification Technology and Applications,* 2007, vol. 1 (4
- **I.A. MCGREGOR.** Switching system for single antenna operation of an S-band FMCW radar. *IEE Proc.-Radar, Sonar Navig.,* August 1994, vol. 141 (4

- **MICHAEL Y. LAUKINE ; PETER COLE.** *INTEGRAL BACKSCATTERING TRANSPONDERS FOR LOW COST RFID APPLICATIONS, http://autoidlabs.eleceng.adelaide.edu.au/Tutorial/backscat.pdf*